# EUROPEAN PATENT APPLICATION

(11) **EP 1 650 772 A1**
(43) Date of publication of application: **26.04.2006**
(21) Application number: 04747956.3
(22) Date of filing: 20.07.2004
(51) Int. Cl.: H01F 1/11, C04B 35/26

(54) **FERRITE MAGNETIC MATERIAL AND METHOD FOR PRODUCING HEXAGONAL W TYPE FERRITE MAGNETIC MATERIAL**

(30) Priority: 31.07.2003 JP 2003204951; 26.12.2003 JP 2003435404
(71) Applicant: TDK Corporation, Chuo-ku, Tokyo 103-8272 (JP)
(72) Inventor: MINACHI, Yoshihiko, Chuo-ku, Tokyo 1038272 (JP); NAGAOKA, Junichi, Chuo-ku, Tokyo 1038272 (JP); ITO, Noboru, Chuo-ku, Tokyo 1038272 (JP); KURASAWA, Syunsuke, Chuo-ku, Tokyo 1038272 (JP); MURASE, Taku, Chuo-ku, Tokyo 1038272 (JP); TAKAGAWA, Kenya, Chuo-ku, Tokyo 1038272 (JP); UMEDA, Hidenobu, Chuo-ku, Tokyo 1038272 (JP)
(74) Representative: Hoffmann, Klaus
(86) International application number: PCT/JP2004/010593
(87) International publication number: WO 2005/013293

(57) **Abstract**

The present invention provides a ferrite magnetic material comprising as a main constituent a compound represented by a composition formula, AFe2⁺ₐFe³⁺_{b}O₂₇ (wherein 1.1 ≤ a ≤ 2.4, 12.3 ≤ b ≤ 16.1; and A comprises at least one element selected from Sr, Ba and Pb), and also comprising as additives a Ca constituent in terms of CaCO₃ and a Si constituent in terms of SiO₂ so as to satisfy the relation CaCO₃/SiO₂ = 0. 5 to 1.38 (molar ratio). By making the relation CaCO₃/SiO₂ = 0.5 to 1.38 (molar ratio) be satisfied, the coercive force (HcJ) and the residual magnetic flux density (Br) can be made to simultaneously attain high levels.

## Description

### Technical Field

The present invention relates to a hard ferrite material, in particular, a ferrite magnetic material suitably usable for a hexagonal W-type ferrite magnet.

### Background Art

Magnetoplumbite-type hexagonal ferrites typified by SrO.6Fe₂O₃, namely, M-type ferrites have hitherto been mainly used for sinteredmagnets. As for suchM-type ferritemagnets, attempts have been made to attain high performances by focusing on making the ferrite grain sizes approach the single-domain grain sizes, aligning the ferrite grains along the magnetic anisotropy directions and attaining high densities. As a result of such attempts, the properties of the M-type ferrite magnets are approaching the upper limits thereof to lead to a situation such that further drastically improved magnetic properties of the magnets concerned are hardly to be desired.

W-type ferrite magnets are known as such ferrite magnets that have a possibility of exhibiting magnetic properties superior to those of the M-type ferrite magnets. The W-type ferrite magnets are higher by about 10% in saturation magnetization (4πIs) than the M-type ferrite magnets and comparable in anisotropy field with the M-type ferrite magnets. Patent Document 1 (National Publication of International Patent Application No. 2000-501893) discloses a W-type ferrite magnet having a composition represented by SrO.2 (FeO) -n (Fe₂O₃) with n satisfying 7.2 ≤ n ≤ 7.7, having a sintered body mean grain size of 2 µm or less and a (BH)max value of 5 MGOe or more, and describes that the W-type ferrite magnet is produced through the steps of (1) mixing SrCO₃ and Fe₂O₃ with each other in a required molar ratio, (2) adding C to the raw material powder, (3) calcining, (4) separately adding CaO, SiO₂ and C after calcining, (5) milling to a mean particle size of 0.06 µm or less, (6) compacting the obtained milled power in a magnetic field, and (7) sintering in a nonoxidative atmosphere.

Patent Document 2 (Japanese Patent Laid-Open No. 11-251127) discloses, as a W-type ferrite magnet having a maximum energy product exceeding those of conventional M-type ferrites and having a composition different from the conventional ones, a ferrite magnet characterized in that the basic composition thereof is represented in terms of atomic ratio by MO·xFeO·(y-x/2) Fe₂O₃ (M comprises one or more of Ba, Sr, Pb and La) with the proviso that 1.7 ≤x≤ 2.1 and 8.8 ≤y≤9.3.

Patent Document 3 (Japanese Patent Laid-Open No. 2001-85210) discloses, as a ferrite sintered magnet having magnetic properties superior to those of conventional M-type ferrites, a ferrite sintered magnet composed of a composite material in which a W-type ferrite phase represented by a composition formula AO·2 (BO)·8Fe₂O₃, wherein A comprises one or more of Ba, Sr, Ca and Pb, and B comprises one or more of Fe, Co, Ni, Mn, Mg, Cr, Cu and Zn, and the W-type ferrite phase coexists with one or two of an M-type ferrite phase represented by a composition formula AO·6Fe₂O₃, wherein A comprises one or more of Ba, Sr, Ca and Pb, and a magnetite phase represented by a composition formula Fe₃O₄, the ferrite sintered magnet being characterized by having a molar ratio of the W-type ferrite phase ranging from 60 to 97%, a mean grain size thereof ranging from 0.3 to 4 µm and a magnetic anisotropy related to a particular direction.

The W-type ferrite magnets disclosed in Patent Documents 1 to 3 have been investigated by focusing on the basic composition (the main composition) in such a way that, for example, in Patent Document 1, n in SrO·2 (FeO)·n (Fe₂O₃) is set to fall within a range from 7.2 to 7.7. On the other hand, in ferrite magnets, predetermined amounts of SiO₂ and CaCO₃ are added as additives for the purpose of improving the coercive force or regulating the grain size. Accordingly, it is important to investigate the main composition by also taking the additives into consideration for the purpose of obtaining practical W-type ferrite sintered magnets. However, such investigations have not been reported also in Patent Documents 1 to 3.

Accordingly, the present invention takes it as an object to provide an optimal composition of a ferrite magnetic material wherein the optimal composition takes even additives into consideration.

### Disclosure of the Invention

The present invention has been achieved in view of such technical problems as described above, and provides a ferrite magnetic material characterized by comprising as a main constituent a compound represented by a composition formula, AFe²⁺ₐFe³⁺_{b}O₂₇ (wherein 1.1 ≤ a ≤ 2.4, 12.3 ≤ b ≤ 16.1; and A comprises at least one element selected from Sr, Ba and Pb) , and also by comprising as additives a Ca constituent in terms of CaCO₃ and a Si constituent in terms of SiO₂ so as to satisfy the relation CaCO₃/SiO₂ = 0.5 to 1.38 (molar ratio).

The ferrite magnetic material of the present invention makes it possible to simultaneously attain a coercive force (HcJ) of 3 kOe or more and a residual magnetic flux density (Br) of 4.5 kG or more by optimizing the compositions of the main constituent and the additives and further by improving the production steps.

The ferrite magnetic material of the present.invention can be practically used in a variety of forms.

Specifically, the ferrite magnetic material according to the present invention can be applied to ferrite sintered magnets. When applied to ferrite sintered magnets, it is preferable that the sintered bodies concerned each have a mean grain size of 0.8 µm or less.

The ferrite magnetic material according to the present invention can also be applied to ferrite magnet powders. Such ferrite magnet powders can be used for bonded magnets. In other words, the ferrite magnetic material according to the present invention can constitute bonded magnets as ferrite magnet powders to be dispersed in resins.

The ferrite magnetic material according to the present invention can also constitute magnetic recording media as film-like magnetic layers

The ferrite magnetic material according to the present invention preferably has as its main phase a hexagonal W-type ferrite (a W phase). The main phase as referred to herein means that the molar ratio of the W phase as derived from the X-ray diffraction intensity amounts to 70% or more. According to the ferrite magnetic material of the present invention, it is possible to make the W phase be a single phase, in other words, to make the molar ratio of the W phase almost equal to 100%.

The ferrite magnetic material according to the present invention preferably comprises a Ca constituent in terms of CaCO₃ in an amount within a range from 0.3 to 1.5 wt% and a Si constituent in terms of SiO₂ in an amount within a range from 0.1 to 1.8 wt%.

The present invention also provides a method for producing a hexagonal W-type ferrite magnetic material comprising the steps of: (a) obtaining a raw material powder comprising A (wherein A comprises at least one element selected from Sr, Ba and Pb) and Fe; (b) obtaining a calcined body by maintaining the raw material powder at a predetermined temperature for a predetermined time; and (c) milling the calcined body, wherein CaCO₃ and/or SiO₂ are added before and/or after said step (b) so that the hexagonal W-type ferrite magnetic material comprises a Ca constituent in terms of CaCO₃ and a Si constituent in terms of SiO₂ so as to satisfy the relation of molar ratio CaCO₃/SiO₂ = 0.5 to 1.38.

The above described production method comprises the following embodiments.

In one embodiment, when the Ca constituent in terms of CaCO₃ and the Si constituent in terms of SiO₂ are added before the step (b) in a molar ratio of CaCO₃/SiO₂ = 0.5 to 1.38, the ferrite magnet powder is prepared by milling in the step (C). Also, in another embodiment, when CaCO₃ and SiO₂ are added similarly before the step (b) in a molar ratio of CaCO₃/SiO₂ = 0.5 to 1.38, a ferrite sinteredmagnet is prepared by sintering the milled powder obtained in the step (c).

Further, in one embodiment, when the Ca constituent in terms of CaCO₃ and the Si constituent in terms of SiO₂ are added by adding CaCO₃ and SiO₂ after the step (b) in a molar ratio of CaCO₃/SiO₂ = 0.5 to 1.38, a ferrite sintered magnet is prepared by sintering the milled powder obtained in the step (c). Also, in another embodiment, the ferrite magnet powder is prepared by milling the ferrite sintered magnet.

In still another embodiment in the present invention, when the Ca constituent in terms of CaCO₃ and the Si constituent given in terms of SiO₂ are provided in such a way that only CaCO₃ is added before the step (b) and CaCO₃ and/or SiO₂ are added after the step (b) so as for the molar ratio between CaCO₃ and SiO₂ to satisfy the relation CaCO₃/SiO₂ = 0. 5 to 1. 38, the ferrite sintered magnet is prepared by sintering the milled powder obtained in the step (c).

In the method for producing the hexagonal W-type ferrite magnetic material of the present invention, the raw material powder comprises ACO₃ and Fe₂O₃ preferably in a molar ratio of 1:8.0 to 1:8.6, and more preferably in a molar ratio of 1:8.3 to 1:8.5.

When the ferrite sintered magnet of the present invention is produced, all of a predetermined amount of A (at least one element selected from Sr, Ba and Pb) can be added before the step (b), or alternatively, a fraction of the predetermined amount of A can be added after the step (b). By adopting such production steps, an improvement of the magnetic properties can be attained. In other words, in the present invention, the raw material powder comprises an ACO₃ powder and a Fe₂O₃ powder, and the step (c) for milling the calcined body can be carried out after a predetermined amount of the ACO₃ powder is added after the step (b) for obtaining the calcined body.

### Brief Description of the Drawings

Figure 1 is a flowchart showing the outline of the steps for production of a ferrite sintered magnet according to the present invention;
Figure 2 is a table showing the compositions, magnetic properties and structures of the magnetic materials in Example 1;
Figure 3 is a table showing the relation between CaCO₃/SiO₂ and the mean grain size of the sintered magnet in Example 1;
Figure 4 is a table showing the measurement results of the magnetic properties when SrCO₃ is added after calcining in Example 1;
Figure 5 is a table showing the compositions, magnetic properties and structures of the magnetic materials in Example 4;
Figure 6 is a table showing the measurement results of the mixing composition, the magnetic properties of sintered bodies and the like in Examples 4 to 7;
Figure 7 is a graph showing the relation between the additive amount of a Ca constituent at the time of mixing and the coercive force (HcJ) in Example 4;
Figure 8 is a graph showing the relation between the additive amount of the Ca constituent at the time of mixing and the residual magnetic flux density (Br) in Example 4;
Figure 9 is a graph showing the relation between the additive amount of the Ca constituent at the time of mixing and the mean grain size in Example 5; and
Figure 10 is a graph showing the relation between the additive amount of the Ca constituent at the time of mixing and the coercive force (HcJ) in Example 5.

### Best Mode for Carrying Out the Invention

In the following, the present invention will be described in detail with reference to the embodiments thereof.

The W-type ferrites include a Zn-W-type ferrite and a Fe-W-type ferrite. The Zn-W-type ferrite containing Zn in the composition thereof exhibits a higher residual magnetic flux density (Br) than the Fe-W-type ferrite. The Zn-W-type ferrite also has an advantage that it is easily compatible with mass production because it can be sintered in the air. On the other hand, the Zn-W-type ferrite has a drawback that the coercive force (HcJ) thereof is low because the anisotropy field thereof is low. For the purpose of obtaining a high performance W-type ferrite by solving this problem, the Fe-W-type ferrite containing Fe²⁺ in the composition thereof is taken as a target of the present invention.

In the present invention, when the molar ratio of the W phase is 70% or more, the W phase is referred to as the main phase. From the viewpoint of the magnetic properties, the molar ratio of the W phase is desirably 70% or more, preferably 95% or more, and more preferably almost 100% (a single phase). The molar ratio in the present invention is derived as follows: a standard sample is prepared by mixing the powders of a W-type ferrite, an M-type ferrite, hematite and spinel in a predetermined ratio therebetween; the X-ray diffraction intensities of the standard sample thus prepared are measured in advance, and the molar ratio is derived from a comparison with the X-ray diffraction intensities thus obtained as a standard (this is also the case for Examples to be described later).

The ferrite magnetic material of the present invention has a main composition represented by the following composition formula (1):

AFe²⁺ₐFe³⁺_{b}O₂₇ (1)

wherein 1.1 ≤ a ≤ 2.4; 12.3 ≤ b ≤ 16.1; and A comprises at least one elements selected from Sr, Ba and Pb. As A, at least one of Sr and Ba is preferable, and Sr is particularly preferable from the viewpoint of the magnetic properties.

The variable a representing the proportion of Fe²⁺ is set to fall in the range 1.1 ≤ a ≤ 2.4. When a is less than 1.1, the M phase and the Fe₂O₃ (hematite) phase, both lower in saturationmagnetization (4πIs) than the Wphase, are generated to degrade the saturation magnetization (4πIs). On the other hand, when a exceeds 2.4, the spinel phase is generated to degrade the coercive force (HcJ). Accordingly, a is set to fall in the range 1.1 ≤ a ≤ 2.4. The range of a is preferably 1.5 ≤ a ≤ 2.4 and more preferably 1.6 ≤ a ≤ 2.1.

The variable b representing the proportion of Fe³⁺ is set to fall in the range 12.3 ≤ b ≤ 16.1. When b is less than 12.3 or exceeds 16.1, high levels of the coercive force (HcJ) and the residual magnetic flux density (Br) cannot be attained simultaneously. The range of b is preferably 12.9 ≤ b ≤ 15.6 and more preferably 12. 9 ≤ b ≤ 14.9. It is to be noted that, as can be seen from a comparison between Examples 1 and 2 to be described later, it is possible, by adding a fraction of SrCO₃ as a raw material after calcining, to extend the range of b in which high levels of the coercive force (HcJ) and the residual magnetic flux density (Br) can be attained simultaneously.

The ferrite magnetic material according to the present invention comprises the Ca constituent and the Si constituent originated respectively from CaCO₃ and SiO₂. These constituents are present mainly in the grain boundary phase in the ferrite magnetic material, but the states of these constituents is not clear. As described above, CaCO₃ and SiO₂ have hitherto been added in ferrite magnetic materials for the purpose of regulating the coercive force (HcJ) , the grain size and the like. However, the present inventors have verified that there can be obtained a ferrite sintered magnet simultaneously having high levels of coercive force (HcJ) and residual magnetic flux density (Br) by containing CaCO₃ and SiO₂ in a predetermined ratio in the main composition represented by the composition formula (1). The predetermined ratio (molar ratio) as referred to herein means the ratio, CaCO₃/SiO₂ = 0.5 to 1.38. The ratio CaCO₃/SiO₂ is preferably 0.6 to 1.1, and more preferably 0. 65 to 1.0. The following reason is not clear: the reason why there can be obtained a ferrite sintered magnet simultaneously having high levels of coercive force (HcJ) and residual magnetic flux density (Br) by containing CaCO₃ and SiO₂ in a predetermined ratio; however, it may be understood that the following fact maybe involved: the fact that in the case of the ferrite sintered magnet, when the ratio CaCO₃/SiO₂ falls within the range specified in the present invention while the main composition is being the same, the mean grain size of the sintered body is made fine.

It is preferable that CaCO₃ and SiO₂ are contained in the following ranges, respectively: CaCO₃: 0. 3 to 2.0 wt% and SiO₂: 0.1 to 1.8 wt%. When the amount of CaCO₃ is less than 0.3 wt% and the amount of SiO₂ is less than 0.1 wt%, the effect of addition of CaCO₃ and SiO₂ is insufficient. When the amount of CaCO₃ exceeds 2.0 wt%, there is a fear of generating a Ca ferrite to provide a factor for degrading the magnetic properties. Also when the amount of SiO₂ exceeds 1.8 wt%, the residual magnetic flux density (Br) tends to be degraded. The amounts of CaCO₃ and SiO₂ are preferably set to fall in the following ranges: CaCO₃: 0.5 to 1.1 wt% and SiO₂: 0.3 to 1.3 wt%.

It is to be noted that the Ca constituent may also be added in a form other than CaCO₃, and the Si constituent may also be added in a form other than SiO₂.

The composition of the ferrite magnetic material according to the present invention can be measured by means of X-ray fluorescence quantitative analysis or the like. Additionally, the present invention does not exclude the inclusion of elements other than the element(s) A (at least one element selected from Sr, Ba and Pb) , Fe, the Ca constituent and the Si constituent. For example, a fraction of the Fe²⁺ sites may be replaced with other elements.

The ferrite magnetic material of the present invention, as described above, can constitute any of a ferrite sintered magnet, a ferrite magnet powder, a bonded magnet as a ferrite magnet powder dispersed in a resin, and a magnetic recording medium as a film-like magnetic layer.

The ferrite sintered magnet and the bonded magnet according to the present invention are machined to predetermined shapes to be used in a wide range of applications as shown below. These can be used as motors in automobiles for use in fuel pumps, power windows, ABSs (antilock brake systems), fans, wipers, power steerings, active suspensions; starters, door locks, electric mirrors and the like. These can also be used as motors for use in OA and AV devices such as FDD spindles, VTR capstans, VTR rotation heads, VTR reels, VTR loading devices, VTR camera capstans, VTR camera rotation heads, VTR camera zooming devices, VTR camera focusing devices, capstans in radio cassette players and the like, spindles for CD, LD and MD, loading in CD, LD and MD, and optical pickup for CD and LD. These can also be used as motors for use in household electric appliances such as air compressors, refrigerator compressors, electric tool drivers, electric fans, fans in microwave ovens, turnplates in microwave ovens, mixer drivers, dryer fans, shaver drivers, electric toothbrushes and the like. Further, these can be used as motors for use in FA equipment such as motors for use in robot axes, joint driving devices, robot main axis driving devices, machine tool table driving devices, machine tool belt driving devices and the like. Among other applications included are suitably applied examples such as electric generators for use in motorcycles, magnets for use in speakers/headphones, magnetron tubes, MRI magnetic field generators, CD-ROM clampers, distributor sensors, ABS sensors, fuel/oil level sensors, magnet latches, isolators and the like.

When a bonded magnet is produced from the ferrite magnet powder of the present invention, the mean particle size of the powder is preferably set to be 0.1 to 5 µm. The mean particle size of the powder for use in the bonded magnet is more preferably 0.1 to 2 µm, and furthermore preferably 0.1 to 1 µm.

When a bonded magnet is produced, a ferrite magnet powder is kneaded with various binders such as a resin, a metal, a rubber and the like, and compacted in a magnetic field or under conditions free frommagnetic field. As the binder, NBR rubber, chlorinated polyethylene and polyamide resin are preferable. After compacting, curing is carried out to produce a bonded magnet. It is to be noted that a heat treatment to be described later is desirably carried out before kneading of the ferrite magnet powder with a binder.

By using the ferrite magnetic material of the present invention, magnetic recording media each having a magnetic layer can be prepared. This magnetic layer comprises the W-type ferrite phase represented by the above described composition formula (1). In forming the magnetic layer, for example, an evaporation method and a sputtering method can be used. When the magnetic layer is formed by means of the sputtering method, the ferrite sintered magnet according to the present invention may be used as a target. Examples of the magnetic recording media may include hard disks, flexible disks and magnetic tapes.

Next, the method for producing a ferrite sintered magnet, among the ferrite magnetic materials of the present invention, will be described below. The method for producing the ferrite sintered magnet of the present invention comprises a mixing step, a calcining step, a pulverizing step, a milling step, a compacting step in a magnetic field, a step for heat treating a compacted body and a sintering step.

Because Fe²⁺ tends to turn into Fe³⁺ in the air, the heat treatment temperature, the sintering atmosphere and the like are controlled in the method for producing a ferrite sintered magnet of the present invention for the purpose of controlling Fe²⁺ to be stable. Now, the individual steps will be described below.

### <Mixing step>

An Fe₂O₃ (hematite) powder is prepared, and a SrCO₃ powder is further prepared when Sr is selected as the element A. The SrCO₃ powder and the Fe₂O₃ (hematite) powder are weighed out so as for the main composition to satisfy composition formula (1). For that purpose, more specifically, the amounts of the SrCO₃ powder and the Fe₂O₃ powder are made to fall within a range from 1:8.0 to 1:8.6 by molar ratio. In this connection, CaCO₃ and SiO₂ may be added for the purpose of improving the coercive force and regulating the grain size. The additive amounts concerned are as above described. In the present invention, powders of Al₂O₃, Cr₂O₃ and the like may also be added; the SrCO₃ powder and the Fe₂O₃ powder may also be added after calcining. After weighing out, these ingredients are mixed and crushed for 1 to 3 hours with a wet attritor or the like.

An example utilizing a SrCO₃ powder and a Fe₂O₃ powder will be described below; the element A is added as a carbonate in this embodiment, but alternatively may be added as an oxide. Similarly for Fe, Fe may be added as a compound other than Fe₂O₃ (hematite). Additionally, a compound containing the element A and Fe may also be used.

As for the SrCO₃ powder as the raw material powder for the element A, the total amount thereof may be added in the mixing step, but alternatively, a fraction of the amount thereof may be added after calcining. In this way, the improvement of the magnetic properties can be attained.

In the present invention, a predetermined amount of the Ca constituent and/or a predetermined amount of Si constituent may be added as additive (s) in the mixing step, and the addition of the Ca constituent is particularly effective. The Ca constituent may be added, for example, as a CaCO₃ powder or as a CaO powder. The additive amount of the Ca constituent at the time of mixing is set to be 0.01 wt% or more and less than 1. 0 wt% in terms of CaCO₃ in relation to the above described main constituent comprising the element A and the Fe constituent. The addition of the Ca constituent in this range makes the mean grain size as fine as equal to or less than 0.6 µm, and furthermore, equal to or less than 0.55 µm, eventually to permit yielding a ferrite magnetic material having a coercive force (HcJ) exceeding 3000 Oe.

The additive amount of the Ca constituent is preferably 0.1 to 0.9 wt%, and more preferably 0.2 to 0.8 wt% in terms of CaCO₃.

### <Calcining step>

Subsequently, the mixed powder material obtained in the mixing step is calcined at 1100 to 1400°C. By conducting this calcining in a nonoxidative atmosphere of a gas such as nitrogen gas, argon gas or the like, the Fe³⁺ in the Fe₂O₃ (hematite) powder is reduced to generate Fe²⁺ constituting a W-type ferrite, and thus a W-type ferrite is formed. However, if a sufficient amount of Fe²⁺ can not be ensured at this step, an M phase or a hematite phase are allowed to be present in addition to the W phase. For the purpose of obtaining a single W-phase ferrite, it is effective to regulate the oxygen partial pressure in calcining because when the oxygen partial pressure is decreased, Fe³⁺ tends to be easily reduced to generate Fe²⁺.

As described above, when the total amount of SrCO₃ is not added before calcining, a predetermined amount of the SrCO₃ powder is added after calcining.

Also when CaCO₃ and SiO₂ have already been added in the mixing step, it is also possible that the calcined body is milled to a predetermined grain size to yield a ferrite magnet powder.

In the present invention, the Ca constituent can be added in the mixing step, but it is preferable that the Ca constituent is also added after the calcining step and before the compacting step. The Ca constituent added after the calcining step contributes for the purpose of improving the coercive force (HcJ) and regulating the grain size. The additive amount of the Ca constituent at this stage is preferably 0.1 to 2.0 wt% in terms of CaCO₃. When the amount of CaCO₃ exceeds 2.0 wt%, there is a fear of generating a Ca ferrite to provide a factor for degrading the magnetic properties. The amount of the Ca constituent added after the calcining step is preferably 0.2 to 1.5 wt% in terms of CaCO₃, and more preferably 0.3 to 1.2 wt% in terms of CaCO₃.

The Si constituent, contributing for the purpose of improving the coercive force (HcJ) and regulating the grain size, may also be added in the mixing step, but it is preferable that the Si constituent is added after the calcining step and before the compacting step in a range from 0.2 to 1.4 wt% in terms of SiO₂. When the Si constituent is added in an amount of less than 0.2 wt% in terms of SiO₂, the effect of the addition of the Si constituent is insufficient, while when the Si constituent is added in an amount of more than 1.4 wt% in terms of SiO₂, the residual magnetic flux density (Br) tends to be degraded. The additive amount of the Si constituent is preferably 0.2 to 1.0 wt%, and more preferably 0.3 to 0.8 wt% in terms of SiO₂.

### <Pulverizing step>

The calcined body is generally granular, so that it is preferable to disintegrate the calcined body. In the pulverizing step, a vibration mill or the like is used to disintegrate the calcined body until the mean particle size falls within the range from 0.5 to 10 µm. The powder obtained in this step will be referred to as a coarse powder.

### <Milling step>

In the subsequent milling step, the coarse powder is wet milled or dry milled with an attritor, a ball mill, a jet mill or the like so as for the particle size to be 1 µm or less, preferably 0.1 to 0.8 µm, and more preferably 0.1 to 0.6 µm, to yield a fine powder. It is also effective to add carbon powder having reduction effect in this step for the purpose of generating the W-type ferrite in an almost single phase (or a single phase) state. As described above, CaCO₃ and SiO₂ may be added in advance of milling for the purpose of improving the coercive force and regulating the grain size.

The milling step is preferably carried out in two separated steps, namely, a first fine milling step and a second fine milling step, or in three or more steps, from the viewpoint of the magnetic properties. The milling procedures involved will be described below.

In the first fine milling, the coarse powder is wet milled or dry milled with an attritor, a ball mill, a jet mill or the like so as for the particle size to be 1 µm or less, preferably 0.1 to 0.8 µm, and more preferably 0.1 to 0.6 µm. The first fine milling step is conducted for the purpose of vanishing the coarse powder, and further for the purpose of making fine the structure after sintering in order to improve the magnetic properties, and accordingly the specific surface area (based on the BET method) is preferably set to fall within a range from 20 to 25 m²/g.

The milling treatment time depends on the milling method adopted; when the coarse powder is wet milled with a ball mill, it is recommended that the milling treatment is carried out for 60 to 100 hours per 200 g of the coarse powder.

For the purpose of improving the coercive force and regulating the grain size, powders of CaCO₃ and SiO₂, and further, SrCO₃, BaCO₃, Al₂O₃, Cr₂O₃ and the like may be added in advance of the first milling.

In a heat treatment step, the fine powder obtained in the fist milling is heat treated by maintaining the fine powder at 600 to 1200°C, more preferably at 700 to 1000°C, for 1 second to 100 hours.

By passing through the first milling, an ultra fine powder as a powder less than 0.1 µm in particle size is inevitably generated. The presence of such an ultra fine powder sometimes causes troubles in the subsequent compacting step. For example, when the proportion of such an ultra fine powder is large, there is caused a trouble in wet compacting such that no compacting is possible because of the adverse retention of water by the ultra fine powder. Accordingly, in an embodiment of the present invention, a heat treatment (a heat treatment of the powder) is carried out in advance of the compacting step. More specifically, this heat treatment is carried out for the purpose of reducing the proportion of the ultra fine powder by reacting the ultra fine powder less than 0.1 µm in particle size generated in the first milling with the fine powder (for example a fine powder of 0.1 to 0.2 µm in particle size) larger in particle size than the ultra fine powder. This heat treatment reduces the proportion of the ultra fine powder, and the compactibility can be thereby improved.

The atmosphere of the heat treatment is recommended to be a nonoxidative atmosphere similarly to the calcining step. The nonoxidative atmosphere in the present invention comprises an atmosphere of an inert gas such as nitrogen gas or Ar gas. The nonoxidative atmosphere of the present invention allows inclusion of 10 vol% or less of oxygen. When such an order of amount of oxygen is included, the oxidation of Fe²⁺ is negligible when maintained at the above described temperature.

The oxygen amount of the heat treatment atmosphere is preferably 1 vol% or less, and more preferably 0.1 vol% or less.

In the second milling following the heat treatment, the heat-treated fine powder is wet milled or dry milled with an attritor, a ball mill, a jet mill or the like, to be 1 µm or less in particle size, preferably 0.1 to 0.8 µm and more preferably 0.1 to 0. 6 µm. The second milling is carried out for the purpose of regulating the particle size, eliminating the necking and improving the dispersibility of an additive or additives; the specific surface area (based on the BET method) of the second fine milled powder is preferably set to fall within a range from 10 to 20 m²/g and more preferably from 10 to 15 m²/g. When the specific surface area is regulated to fall within these ranges, the amount of the ultra fine particles is small, if any, and the compactibility is not adversely affected. In other words, by passing through the first milling step, the step for heat treating the powder and the second milling step, the requirement that the structure after sintering be made fine can be satisfied without adversely affecting the compactibility.

The milling treatment time depends on the milling method adopted; when the fine powder is wet milled with a ball mill, it is recommended that the milling treatment is carried out for 10 to 40 hours per 200 g of the fine powder. If the second milling step is carried out under the conditions similar to those for the first milling step, ultra fine powder is once again generated, and the desired particle size is almost attained in the first milling step, so that the second milling step is usually alleviated in the milling conditions as compared to the first milling step. The judgment as to whether the milling conditions are alleviated or not is recommended to be made on the basis of the mechanical energy to be input at the time of milling while not restricting the focus on the milling time.

For the purpose of obtaining a ferrite magnetic material having high magnetic properties, it is effective to add powders of CaCO₃ and SiO₂, and further, SrCO₃, BaCO₃ and the like in advance of the second milling step in order to improve the coercive force (HcJ) and regulate the grain size.

Carbon powder which displays reduction effect in the sintering step may be added in advance of the second milling step. The addition of carbon powder is effective for the purpose of generating the W-type ferrite to be in an almost single phase (or a single phase) state. The additive amount of carbon powder (hereinafter referred to as "carbon amount") is set to fall within a range from 0.05 to 0.7 wt% in relation to the raw material powder. By constraining the carbon amount within this range, the effect of carbon powder as a reducing agent can be sufficiently enjoyed in the sintering step to be described later, and a higher saturation magnetization (σs) than without added carbon powder can be obtained. The carbon amount in the present invention is preferably 0.1 to 0.65 wt%, and more preferably 0.15 to 0.6 wt%. As the carbon powder to be added, well known substances such as carbon black can be used.

In the present invention, for the purpose of preventing the segregation of the added carbon powder in the compacted body, it is preferable to add a polyhydric alcohol represented by a general formula Cₙ(OH)ₙHₙ₊₂ in advance of the second milling step. In this general formula, the number n of carbon atoms is set to be 4 or more. When the number n of carbon atoms is 3 or less, the effect of preventing the segregation of carbon powder is insufficient. The number n of carbon atoms is preferably 4 to 100, more preferably 4 to 30, furthermore preferably 4 to 20, and yet furthermore preferably 4 to 12. Sorbitol is preferable as the polyhydric alcohol, but two or more polyhydric alcohols may be used in combination. In addition to the polyhydric alcohol to be used in the present invention, other dispersants well known in the art may further be used.

The above described general formula is a formula referring to a case where the skeleton is wholly composed of a chain and does not include unsaturated bonds. The number of the hydroxy groups and the number of the hydrogen atoms in the polyhydric alcohol may be somewhat less than those represented by the general formula. In the general formula, unsaturated bonds may be included, without restricting to saturated bonds. The basic skeleton may be either a chain or a ring, but is preferably a chain. When the number of the hydroxy groups is 50% or more of the number n of the carbon atoms, the advantageous effects of the present invention is actualized, but it is preferable that the number of the hydroxy groups is as larger as possible, and it is most preferable that the number of the hydroxy groups and the number of the carbon atoms are the same. It is recommended that the additive amount of the polyhydric alcohol is 0.05 to 5.0 wt%, preferably 0.1 to 3.0 wt%, and more preferably 0.3 to 2.0 wt% in relation to the powder to be added with the polyhydric alcohol. Most of the added polyhydric alcohol is decomposed to be eliminated in the step for heat treating the compacted body to be carried out after the compacting step in a magnetic field. The remaining polyhydric alcohol which has not been decomposed to be eliminated in the step for heat treating the compacted body is decomposed to be eliminated in the subsequent sintering step.

### <Compacting step in a magnetic field>

The fine powder obtained in the above described milling steps is subj ected to wet or dry compacting in a magnetic field. It is preferable to carry out wet compacting for the purpose of enhancing the orientation degree, and accordingly description will be made below on the case where wet compacting is carried out.

When wet compacting is adopted, the second milling step is carried out in a wet manner, and the slurry after wet milling is concentrated to prepare a slurry for wet compacting. The concentration may be carried out by means of centrifugal separation, a filter press, or the like. In this case, it is preferable that the proportion of the ferrite magnet powder amounts to 30 to 80 wt% of the slurry for wet compacting. When the water is used as a dispersion medium, it is also preferable to add surfactants such as gluconic acid (salt) and sorbitol. Then, compacting in a magnetic field is carried out by use of the slurry for wet compacting. It is recommended that the compacting pressure is set to be of the order of 0.1 to 0.5 ton/cm², the applied magnetic field is set to be of the order of 5 to 15 kOe. The dispersion medium is not limited to water, but may be a nonaqueous medium. When a nonaqueous dispersion medium is used, an organic solvent such as toluene or xylene may be used. When toluene or xylene is used as a nonaqueous dispersion medium, it is preferable to add a surfactant such as oleic acid.

### <Step for heat treating a compacted body>

In the present step, the compacted body is subjected to a heat treatment in which the compacted body is maintained at temperatures as low as 100 to 450°C, and more preferably as low as 200 to 350°C, for 1 to 4 hours. By carrying out this heat treatment in the air, a fraction of Fe²⁺ is oxidized into Fe³⁺. In other words, in the present step, by making the reaction from Fe²⁺ to Fe³⁺ proceed to a certain extent, the amount of Fe²⁺ is controlled to a predetermined value. In the present step, the dispersion medium is eliminated.

### <Sintering step>

In the following sintering step, the compacted body is sintered at 1100 to 1270°C, and more preferably 1160 to 1240°C for 0.5 to 3 hours. The sintering atmosphere should be a nonoxidative atmosphere on the same grounds as those for the calcining step. In the present step, the carbon powder added before the second milling step is eliminated.

By passing through the above described steps, the ferrite sintered magnet of the present invention can be obtained. According to the ferrite sintered magnet of the present invention, a residual magnetic flux density (Br) of 4.5 kG or more and a coercive force (HcJ) of 3 kOe or more can be simultaneously attained. In the present invention, the obtained sintered magnet can be milled to be used as a ferrite magnet powder. The ferrite magnet powder can be used for bonded magnets.

In the above, description has been made on the method for producing the ferrite sintered magnet; also when the ferrite magnet powder is produced, the same steps can be appropriately adopted. The ferrite magnet powder according to the present invention may be produced through two processes in which it is produced from the calcined body and from the sintered body, respectively.

When produced from the calcined body, CaCO₃ and SiO₂ are added before the calcining step. The calcined body having been obtained by adding CaCO₃ and SiO₂ is subjected to pulverizing and milling to yield the ferrite magnet powder. The ferrite magnet powder thus obtained is subjected to the above described heat treatment, and then put into practical use as the ferrite magnet powder. For example, bonded magnets are produced by using the ferrite magnet powder having been subjected to heat treatment. The ferrite magnet powder is not only used for bonded magnets, but can be used for producing ferrite sintered magnets. Accordingly, the ferrite magnet powder of the present invention may also be produced within the steps for producing the ferrite sintered magnet. The particle size of the ferrite magnet powder may be different when used for bonded magnets from when used for ferrite sintered magnets, as the case may be.

When the ferrite magnet powder is produced from the ferrite sintered magnet, CaCO₃ and SiO₂ may be added at any step before the sintering step. The ferrite magnet powder of the present invention can be produced by appropriately milling the ferrite sintered magnet obtained on the basis of the above described steps.

As described above, the ferrite magnet powder of the present invention comprises a form of a calcined powder, a form of a powder milled after undergoing calcining and sintering, and a form of a powder heat-treated after undergoing milling subsequently to calcining.

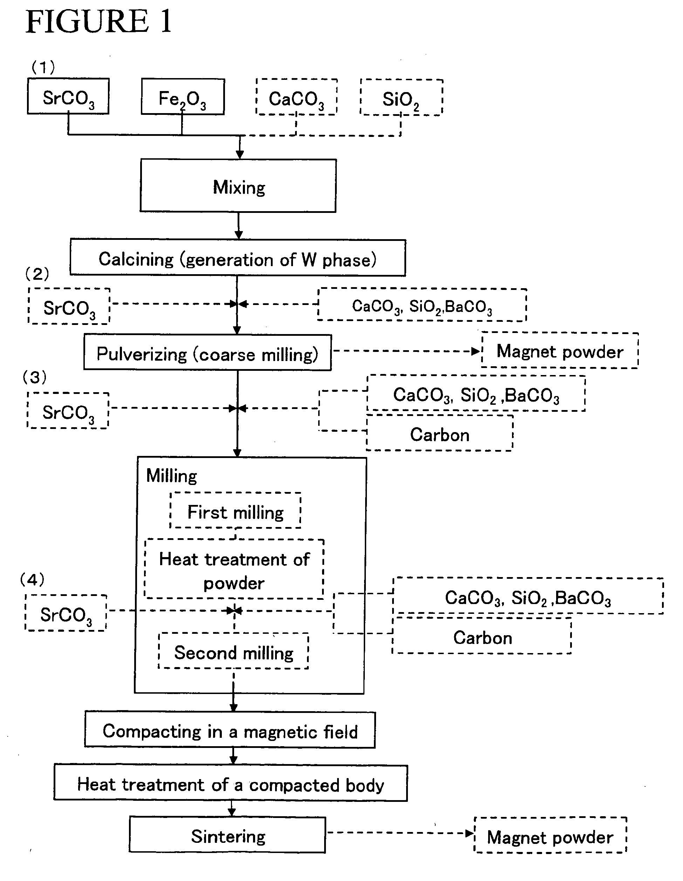

As described above, description has been made on the method for producing the ferrite magnetic material of the present invention, and this production method is outlined in a flowchart in Figure 1. In Figure 1, the steps surrounded with a solid line are the steps indispensable for the production of the sintered magnet and the steps surrounded with a dotted line are optional steps. For example, addition of SrCO₃ is indispensable for the mixing (1), but is optional in any one of (2) to (4).

Hereinafter, examples of the present invention will be described.

### <Example 1>

A ferrite sintered magnet was prepared according to the following procedures.

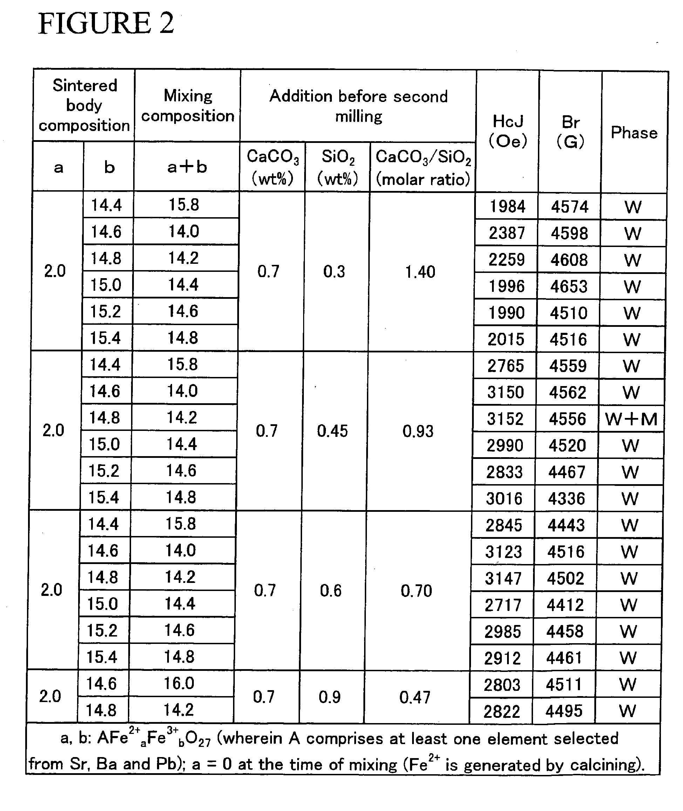

As raw material powders, a Fe₂O₃ powder (primary particle size: 0.3 µm) and a SrCO₃ powder (primary particle size: 2 µm) were prepared. These raw material powders were weighed out so as for a + b in the above formula (1) to be the mixing compositions shown in Figure 2. After weighing out, the powders each having one of the compositions shown in Figure 2 were mixed and crushed with a wet attritor for 2 hours.

Then, each of the mixed powders was dried and sized, and thereafter calcined in nitrogen at 1300°C for 1 hour to yield a powdery calcined body. The calcined body was pulverized with a dry vibration mill for 10 minutes to yield a coarse powder of 1 µm in mean particle size.

Subsequently, the coarse powder was milled. The milling was carried out with a ball mill in two steps. In the first milling, 210 g of the coarse powder was added with 400 ml of water, and the mixture thus obtained was milled for 88 hours. After the first milling, the fine powder thus obtained was subjected to a heat treatment under the conditions that the fine powder was maintained in an atmosphere of N₂ gas at 800°C for 1 hour. The rate of the temperature increase up to 800°C and the rate of the temperature decrease from the 800°C were set at 5°C/min. Subsequently, the second milling in which wet milling was carried out with a ball mill for 25 hours was carried out to yield a slurry for wet compacting. It is to be noted that before the second milling, a SiO₂ powder (primary particle size: 0.01 µm) and a CaCO₃ powder (primary particle size: 1 µm) were added in the amounts shown in Figure 2, and further a carbon powder (primary particle size: 0:05 µm) was added in an amount of 0.3 wt%, and sorbitol (primary particle size: 10 µm) as a polyhydric alcohol was added in an amount of 1.2 wt%. The amount of the calcined powder in the slurry was 33 wt%. Then, the slurry after completion of milling was concentrated with a centrifugal separator to yield the slurry for wet compacting, which was used to perform compacting in a magnetic field. The applied magnetic field (a vertical magnetic field) was 12 kOe (1000 kA/m) , and each of the obtained compacted bodies had a cylindrical form of 30 mm in diameter and 15 mm in height.

Each of the compacted bodies obtained as described above was subjected to a heat treatment in which the compacted body was maintained at 225°C for 3 hours in the air, and thereafter was sintered in nitrogen with a temperature increase rate of 5°C/min and at a maximum temperature of 1200°C for 1 hour to yield a sintered body. The composition of each of the sintered bodies obtained as described above was measured with an X-ray fluorescence spectrometer for quantitative analysis "SIMULTIX 3550" manufactured by Rigaku Corp., and the values of a and b in the above formula (1) were derived. The coercive force (HcJ) and the residual magnetic flux density (Br) were measured for each of the obtained sintered bodies. The results thus obtained are also shown in Figure 2. It is to be noted that the coercive force (HcJ), and the residual magnetic flux density (Br) of each of the obtained sintered bodies were evaluated in such a way that the upper and lower surfaces of the sintered body were machined and thereafter a B-H tracer was used with a maximum applied magnetic field of 25 kOe.

As shown in Figure 2, in each of the cases where CaCO₃/SiO₂ was 1.40 or 0.47, no coercive force (HcJ) of 3 kOe or more and no residual magnetic flux density (Br) of 4.5 kG or more were obtained. On the contrary, in the cases where CaCO₃/SiO₂ was 0.93 or 0.70, a coercive force (HcJ) of 3 kOe or more and a residual magnetic flux density (Br) of 4.5 kG or more were able to be obtained for the b value of 14.6 or 14.8.

As described above, when CaCO₃ and SiO₂ were added, by specifying CaCO₃/SiO₂ and a and b in the above composition formula (1), the coercive force (HcJ) and the residual magnetic flux density (Br) were able to be made to attain simultaneously high levels.

The constituent phase of each of the obtained sintered bodies were observed by X-ray diffraction, and was found to be a single phase composed of the W phase ("W" in Figure 2), except for a sintered body which also contained the M phase ("W+M" in Figure 2) , with a molar ratio of the M phase portion being of the order of 20%. The conditions for the X-ray diffraction were as follows:
X-ray generator: 3 kW; X-ray tube voltage: 45 kV; X-ray tube current: 40 mA; Sampling width: 0. 02 deg; Scanning speed: 4.00 deg/min; Diverging slit: 1.00 deg; Scattering slit: 1.00 deg; Receiving slit: 0.30 mm.

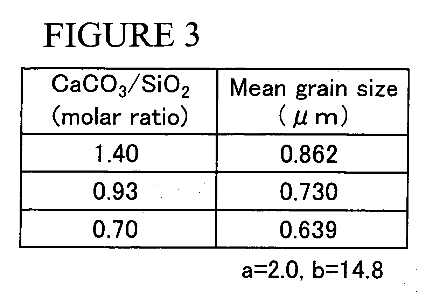

Mean grain sizes were measured for some of the sintered bodies shown in Figure 2 with a = 2. 0 and b = 14.8 in the above composition formula (1). The results obtained are shown in Figure 3. As shown in Figure 3, CaCO₃/SiO₂ and the mean grain size are interrelated with each other; as can be seen, the smaller was CaCO₃/SiO₂, the smaller was the mean grain size. When the CaCO₃/SiO₂ of the present invention fell within the range of the present invention, it was possible to make the grain be as fine as 0.8 µm or less in mean grain size. It is to be noted that the measurement of the mean grain size was carried out as follows: The A surface (the surface containing the a-axis and the c-axis) of a sintered body was polished, thereafter subjected to acid etching, then the SEM (scanning electron microscope) microgram of the surface was taken; the individual grains were identified in the microgram, and the maximum diameter passing through the center of gravity of each of the individual grains was derived on the basis of image analysis to be taken as a grain size of the sintered body; and the mean grain size was obtained in such a way that the grain sizes of about 100 grains per a sample were measured and all the grain sizes thus obtained were averaged.

### <Example 2>

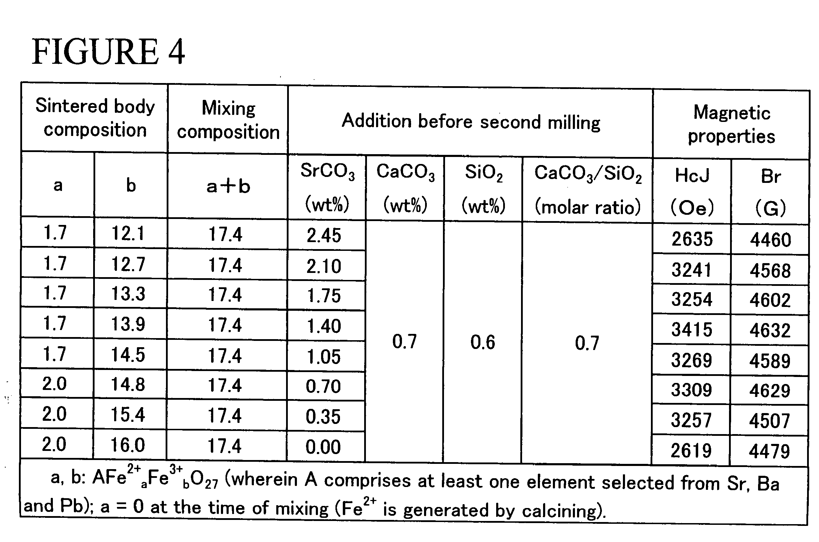

As raw material powders, a Fe₂O₃ powder (primary particle size: 0.3 µm) and a SrCO₃ powder (primary particle size: 2 µm) were prepared. These raw material powders were weighed out so as for a + b to be the mixing compositions shown in Figure 4. After weighing out, the powders were mixed and milled with a wet attritor for 2 hours.

Then, each of the thus obtained mixtures was calcined in nitrogen at 1300°C for 1 hour to yield a powdery calcined body. The calcined body was milled with a dry vibration mill for 10 minutes to yield a coarse powder of 1 µm in mean particle size.

Subsequently, milling was carried out. The milling was carried out with a ball mill in two steps. In the first milling, 210 g of the coarse powder was added with 400 ml of water, and the mixture thus obtained was milled for 88 hours. After the first milling, the fine powder thus obtained was subjected to a heat treatment under the conditions that the fine powder was maintained in an atmosphere of N₂ gas at 800°C for 1 hour. The rate of the temperature increase up to the heating and maintaining temperature and the rate of the temperature decrease from the heating and maintaining temperature were set at 5°C/min. Subsequently, the second milling in which wet milling was carried out with a ball mill for 25 hours was carried out to yield a slurry for wet compacting. It is to be noted that before the start of the second milling, a SrCO₃ powder (primary particle size: 2 µm), a SiO₂ powder (primary particle size: 0.01 µm) and a CaCO₃ powder (primary particle size: 1 µm) were added in the amounts shown in Figure 4, and further a carbon powder (primary particle size: 0.05 µm) was added in an amount of 0.3 wt%, and sorbitol (primary particle size: 10 µm) as a polyhydric alcohol was added in an amount of 1.2 wt%. The amount of the calcined powder in the slurry was 33 wt%. Then, the slurry after completion of milling was concentrated with a centrifugal separator to yield the slurry for wet compacting, which was used to perform compacting in a magnetic field. The applied magnetic field (a vertical magnetic field) was 12 kOe (1000 kA/m) , and each of the obtained compacted bodies was a solid cylinder of 30 mm in diameter and 15 mm in height.

Each of the compacted bodies obtained as described above was subjected to a heat treatment in which the compacted body was maintained at 225°C for 3 hours in the air, and thereafter was sintered in nitrogen with a temperature increase rate of 5°C/min and at a maximum temperature of 1200°C for 1 hour to yield a sintered body. The composition of each of the sintered bodies obtained as described above was measured with an X-ray fluorescence spectrometer for quantitative analysis "SIMULTIX 3550" manufactured by Rigaku Corp., and the values of a and b in the above formula (1) were derived. The coercive force (HcJ) and the residual magnetic flux density (Br) were measured for each of the obtained sintered bodies. The results thus obtained are also shown in Figure 4. It is to be noted that the coercive force (HcJ) and the residual magnetic flux density (Br) of each of the obtained sintered bodies were evaluated in such a way that the upper and lower surfaces of the sintered body were machined and thereafter a B-H tracer was used with a maximum applied magnetic field of 25 kOe.

As shown in Figure 4, the coercive force (HcJ) and the residual magnetic flux density (Br) were improved by adding the SrCO₃ powder as a raw material after calcining, more specifically, before the start of the second milling. In particular, even in the range of b where no coercive force (HcJ) of 3. 0 kOe or more and no residual magnetic flux density (Br) of 4.5 kG or more were able to be obtained in Example 1, coercive forces (HcJ) of 3.0 kOe or more and residual magnetic flux densities (Br) of 4. 5 kG or more were able to be obtained. In other words, by adding after calcining a fraction of the SrCO₃ powder, the range of b in the above composition formula (1) where a coercive force (HcJ) of 3.0 kOe or more and a residual magnetic flux density (Br) of 4.5 kG or more were able to be simultaneously attained was able to be extended. More specifically, in Example 1, a coercive force (HcJ) of 3.0 kOe or more and a residual magnetic flux density (Br) of 4.5 kG or more were able to be simultaneously attained only in the cases where b = 14.6 or 14.8; on the contrary, by adding after calcining a fraction of the SrCO₃ powder, coercive forces (HcJ) of 3.0 kOe or more and residual magnetic flux densities (Br) of 4.5 kG or more were able to be simultaneously attained in the range of 12.3 ≤ b ≤ 15.4.

### <Example 3>

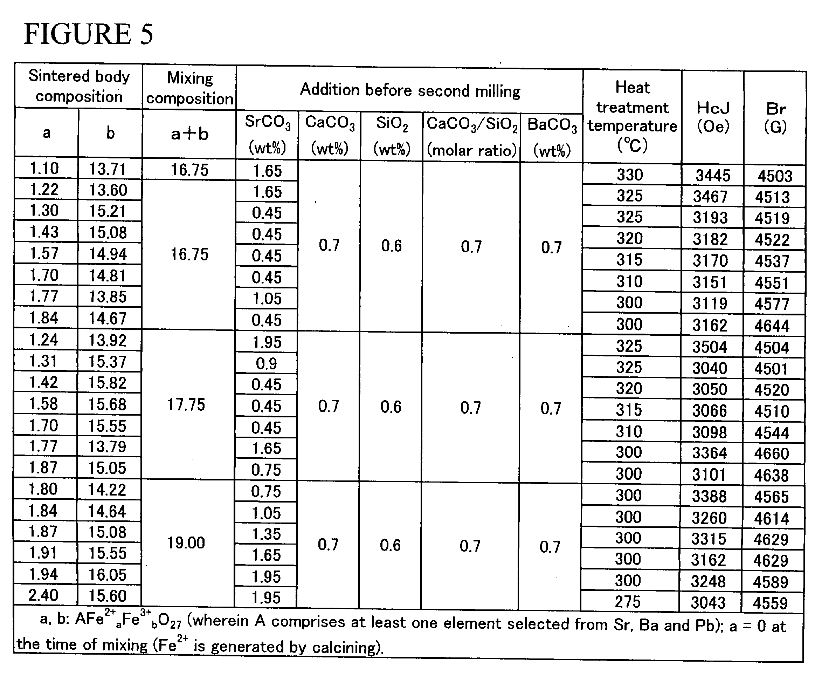

As raw material powders, a Fe₂O₃ powder (primary particle size: 0.3 µm) and a SrCO₃ powder (primary particle size: 2 µm) were prepared. These raw material powders were weighed out so as for a + b to be the mixing compositions shown in Figure 5. After weighing out, these powders were mixed and milled with a wet attritor for 2 hours.

Then, each of the thus obtained mixtures was calcined in nitrogen at 1300°C for 1 hour to yield a powdery calcined body. The calcined body was milled with a dry vibration mill for 10 minutes to yield a coarse powder of 1 µm in mean particle size.

Subsequently, milling was carried out. The milling was carried out with a ball mill in two steps. In the first milling, 210 g of the coarse powder was added with 400 ml of water, and the mixture thus obtained was milled for 88 hours. After the first milling, the fine powder thus obtained was subjected to a heat treatment under the conditions that the fine powder was maintained in an atmosphere of N₂ gas at 800°C for 1 hour. The rate of the temperature increase up to the heating and maintaining temperature and the rate of the temperature decrease from the heating and maintaining temperature were set at 5°C/min. Subsequently, the second milling in which wet milling was carried out with a ball mill for 25 hours was carried out to yield a slurry for wet compacting. It is to be noted that before the start of the second milling, a SrCO₃ powder (primary particle size: 2 µm), a SiO₂ powder (primary particle size: 0.01 µm) and a CaCO₃ powder (primary particle size: 1 µm) were added in the amounts shown in Figure 5, and further a carbon powder (primary particle size: 0.05 µm) was added in an amount of 0.3 wt%, and sorbitol (primary particle size: 10 µm) as a polyhydric alcohol was added in an amount of 1.2 wt%. The amount of the calcined powder in the slurry was 33 wt%. Then, the slurry after completion of milling was concentrated with a centrifugal separator to yield the slurry for wet compacting, which was used to perform compacting in a magnetic field. The applied magnetic field (a vertical magnetic field) was 12 kOe (1000 kA/m) , and each of the obtained compacted bodies was a solid cylinder of 30 mm in diameter and 15 mm in height.

Each of the compacted bodies obtained as described above was subjected to a heat treatment in which the compacted body was maintained at a temperature shown in Figure 5 for 3 hours in the air, and thereafter was sintered in nitrogen with a temperature increase rate of 5°C/min and at a maximum temperature of 1200°C for 1 hour to yield a sintered body. The composition of each of the sintered bodies obtained as described above was measured with an X-ray fluorescence spectrometer for quantitative analysis "SIMULTIX 3550" manufactured by Rigaku Corp., and the values of a and b in the above formula (1) were derived. The magnetic properties of each of the obtained sintered bodies were evaluated in such a way that the upper and lower surfaces of the sintered body were machined and thereafter a B-H tracer was used with a maximum applied magnetic field of 25 kOe. The results thus obtained are also shown in Figure 5.

As shown in Figure 5, by controlling the conditions involving the amount of SrCO₃ added before the second milling, the heat treatment temperature for the compacted body and the like, a coercive force (HcJ) of 3.0 kOe or more and a residual magnetic flux density (Br) of 4.5 kG or more were able to be simultaneously attained over a wide range of a of the above formula (1).

### <Example 4>

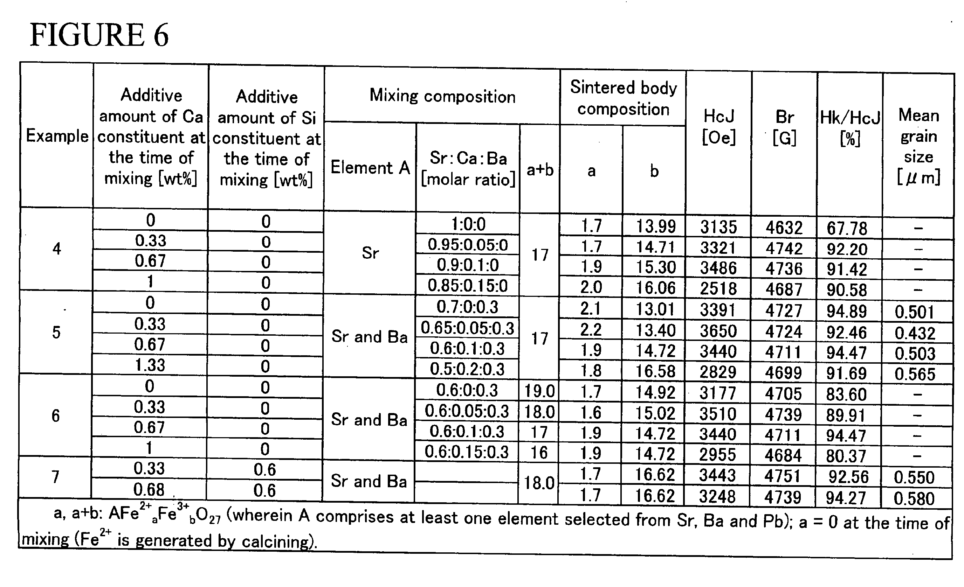

As raw material powders, a Fe₂O₃ powder (primary particle size: 0.3 µm) and a SrCO₃ powder (primary particle size: 2 µm) were prepared. These raw material powders to constitute the main constituent were weighed out so as to give the mixing compositions shown in Figure 6, and thereafter a CaCO₃ powder (primary particle size: 1 µm) was added in an amount of 0 to 1. 0 wt% in relation to the raw material powders constituting the main constituent. Then, the powder mixtures thus obtained were mixed and milled with a wet attritor for 2 hours.

Subsequently, calcining was carried out. A tube furnace was used for calcining, and the calcining was carried out under the conditions that the powder mixtures were maintained in an atmosphere of N₂ gas for 1 hour. The heating and maintaining temperature was set at 1300°C. The rate of the temperature increase up to the heating and maintaining temperature and the rate of the temperature decrease from the heating and maintaining temperature were set at 5°C/min.

Then, pulverizing was carried out with a vibration mill. In the pulverization with a vibration mill, 220 g of a calcined body was milled for 10 minutes.

The following milling was carried out with a ball mill in two steps. In the first milling, 210 g of a coarse milled powder was added with 400 ml of water and the mixture thus obtained was milled for 88 hours.

After the first milling, the fine milled powder thus obtained was subj ected to a heat treatment under the conditions that the fine milled powder was maintained in an atmosphere of N₂ gas at 800°C for 10 minutes or for 1 hour. The rate of the temperature increase up to the heating and maintaining temperature and the rate of the temperature decrease from the heating and maintaining temperature were set at 5°C/min.

Subsequently, the second milling in which wet milling was carried out with a ball mill was carried out to yield a slurry for wet compacting. It is to be noted that before the second milling, a BaCO₃ powder (primary particle size: 0.05 µm) in an amount of 1.75 wt%, a CaCO₃ powder (primary particle size: 1 µm) in an amount of 0.7 wt%, a SiO₂ powder (primary particle size: 0.01 µm) in an amount of 0.6 wt% and a carbon powder (primary particle size: 0.05 µm) in an amount of 0.4 wt% were added, and further sorbitol (primary particle size: 10 µm) as a polyhydric alcohol was added in an amount of 1.2 wt% in relation to each of the fine milled powder subjected to the above described heat treatment.

The slurries obtained by applying the second milling were concentrated with a centrifugal separator, and the thus concentrated slurries for wet compacting were used to perform compacting in a magnetic field. The applied magnetic field (a vertical magnetic field) was 12 kOe (1000 kA/m) , and each of the obtained compacted bodies was a solid cylinder of 30 mm in diameter and 15 mm in height. No failure was caused in any run of compacting. Each of the compacted bodies thus obtained was heat treated in the air at 300°C for 3 hours, and then sintered in nitrogen, with a temperature increase rate of 5°C/min, at a maximum temperature of 1190°C for 1 hour to yield a sintered body. The composition of each of the sintered bodies obtained as described above was measured with an X-ray fluorescence spectrometer for quantitative analysis "SIMULTIX 3550" manufactured by Rigaku Corp., and the values of a and b in the above formula (1) were derived. The coercive force (HcJ) , the residual magnetic flux density (Br) and the squareness (Hk/HcJ) were measured for each of the obtained sintered bodies. The results thus obtained are shown in Figure 6. It is to be noted that the coercive force (HcJ) and the residual magnetic flux density (Br) of each of the obtained sintered bodies were measured in such a way that the upper and lower surfaces of the sintered body were machined and thereafter a B-H tracer was used with a maximum applied magnetic field of 25 kOe. Here, Hk represents an external magnetic field strength at which the magnetic flux density amounts to 90% of the residual magnetic flux density (Br) in the the second quadrant of magnetic hysteresis loop. When Hk is low, no high maximum energy product can be obtained. ThesquarenessHk/HcJ makes an index representing the performances of a magnet and exhibits a degree of squareness in the second quadrant of the magnetic hysteresis loop.

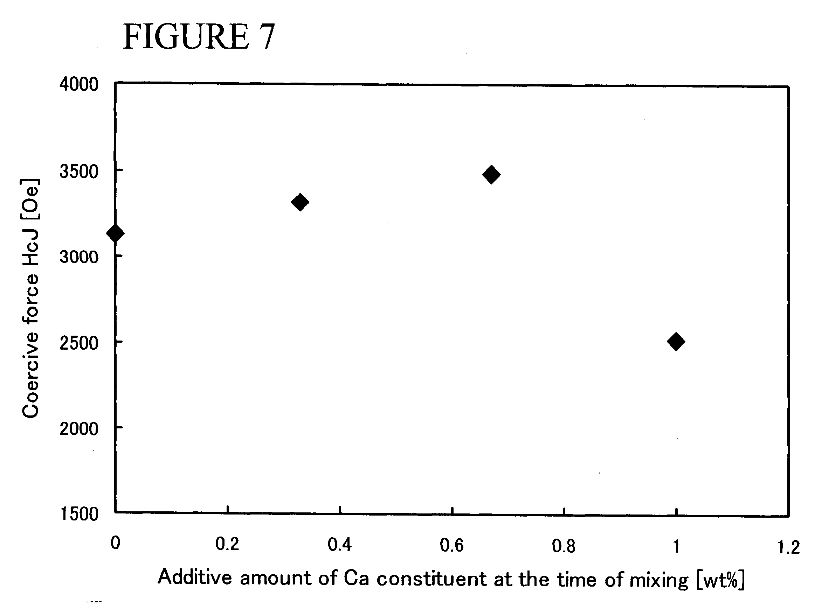

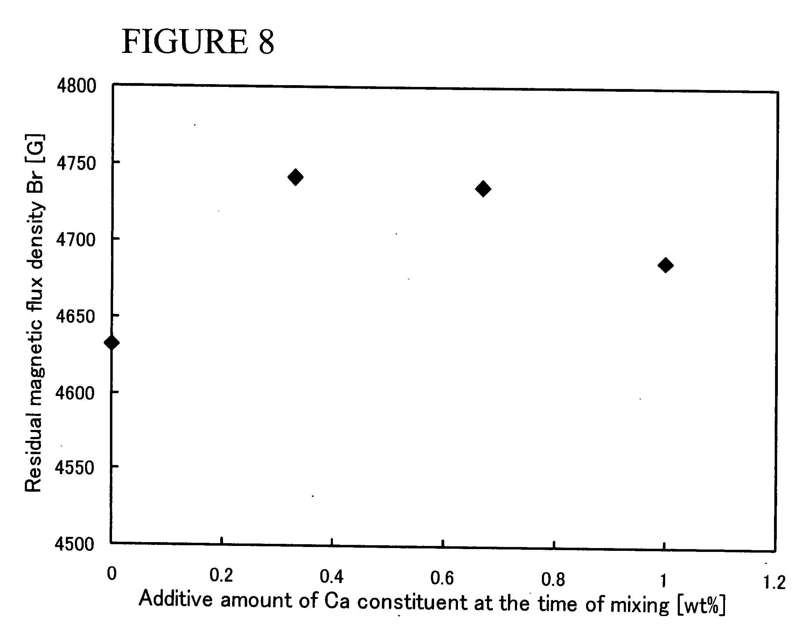

The relation between the additive amount of the Ca constituent at the time of mixing and the coercive force (HcJ) is shown in Figure 7, and the relation between the additive amount of the Ca constituent at the time of mixing and the residual magnetic flux density (Br) is shown in Figure 8.

As shown in Figures 6 to 8, addition of the Ca constituent at the time of mixing improved the coercive forces (HcJ) and the residual magnetic flux densities (Br) as compared to the cases where no Ca constituent was added. When the additive amount of the Ca constituent at the time of mixing reached 1 wt%, the coercive force (HcJ) was made lower than those obtained without the Ca constituent. From the above results, in the present invention, the additive amount of the Ca constituent at the time of mixing is set to be less than 1 wt%, and preferably 0.01 to 0.9 wt% in terms of CaCO₃.

As shown in Figures 6 to 8, according to the samples in which the Ca constituent was added within the range recommended by the present invention at the time of mixing, the coercive forces (HcJ) of 3200 Oe or more, the residual magnetic flux densities of 4700 G or more and the squareness (Hk/HcJ) values of 90% or more were able to be obtained.

### <Example 5>

Sintered bodies were prepared under the same conditions as in Example 4 except that, as a raw material powder constituting the main constituent, a BaCO₃ powder (primary particle size: 0.05 µm) was further prepared, weighing out was carried out to give the mixing compositions shown in Figure 6, and thereafter, a CaCO₃ powder (primary particle size: 1 µm) was added in an amount of 0 to 1.33 wt% in relation to the raw material powders constituting the main constituent; and additionally, at the time of the second milling, there were added a SrCO₃ powder (primary particle size: 2 µm) in an amount of 0.7 wt%, a BaCO₃ powder (primary particle size: 0.05 µm) in an amount of 1.4 wt%, a CaCO₃ powder (primary particle size: 1 µm) in an amount of 0.35 wt%, a SiO₂ powder (primary particle size: 0.01 µm) in an amount of 0.6 wt%, a carbon powder (primary particle size: 0.05 µm) in an amount of 0.4 wt% and sorbitol (primary particle size: 10 µm) in an amount of 1.2 wt%. It is to be noted that the ratios between Sr and Ba in the obtained sintered bodies were as follows:
The additive amount of the Ca constituent at the time of mixing = 0; Sr:Ba = 0.66:0.34
The additive amount of the Ca constituent at the time of mixing = 0.33 wt%; Sr:Ba = 0.64:0.36
The additive amount of the Ca constituent at the time of mixing = 0.67 wt%; Sr:Ba = 0.63:0.37
The additive amount of the Ca constituent at the time of mixing = 1.33 wt%; Sr:Ba = 0.58:0.42

For each of the sintered bodies obtained in the same manner as in Example 4, the composition, the coercive force (HcJ), the residual magnetic flux density (Br) and the squareness (Hk/HcJ) were measured. The measurement results thus obtained are also shown in Figure 6.

As shown in Figure 6, also when Sr and Ba were added in combination at the time of mixing, the tendencies similar to those in Example 4 were able to be verified.

In Figure 6, from a comparison of the samples in which Sr and Ba were selected as the elements A constituting the main constituent with the samples in which only Sr was selected as the element A, it has been found that the former samples showed higher coercive forces (HcJ). Consequently, it can be said that the combined addition of Sr and Ba to constitute the main constituent furthermore improves the coercive force (HcJ) than the single addition of Sr to constitute the main constituent.

The samples in which the additive amount of the Ca constituent at the time of mixing was 0.33 wt% or 0.67 wt% attained the coercive forces (HcJ) of 3400 Oe or more, or 3500 Oe or more while having the residual magnetic flux densities (Br) of 4700 G or more. It is inferred that these high magnetic properties are also originated from the addition of not only the Ba constituent but the Sr constituent in combination as the additives at the time of the second milling.

Next, the mean grain size was measured for each of the samples prepared in Example 5. It is to be noted that the measurement of the mean grain size was carried out as follows: The A surface (the surface containing the a-axis and the c-axis) of a sintered body was polished, thereafter subjected to acid etching, then the SEM (scanning electron microscope) microgram of the surface was taken; the individual grains were identified in the microgram, and the maximum diameter passing through the center of gravity of each of the grains was derived on the basis of image analysis to be taken as a grain size of the sintered body; and the mean grain size was obtained in such a way that the grain sizes of about 100 grains per a sample were measured and all the grain sizes thus obtained were averaged.

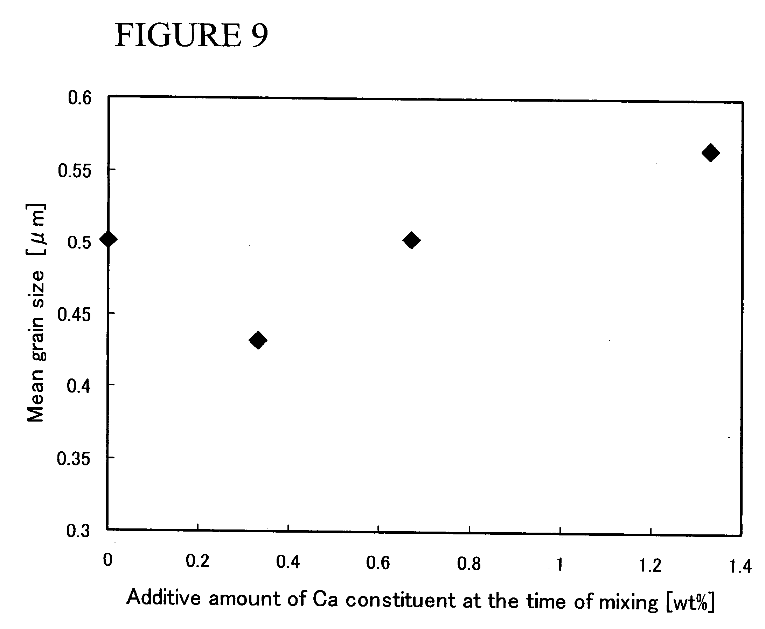

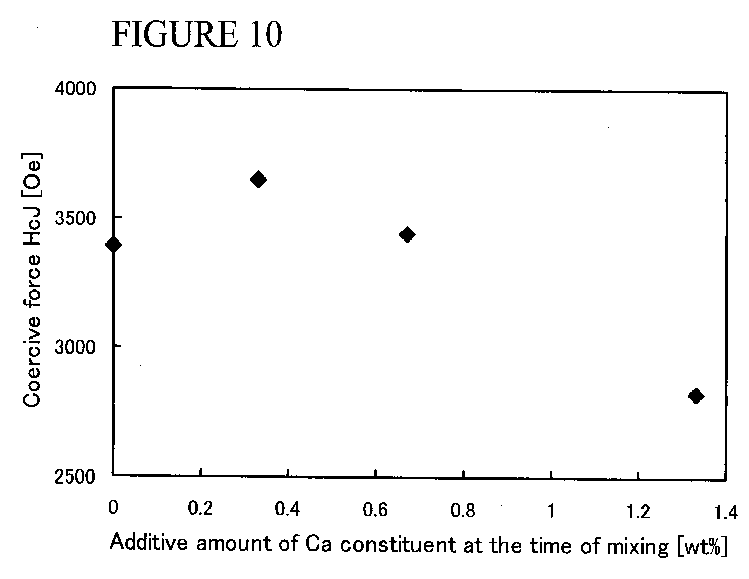

The relation between the additive amount of the Ca constituent at the time of mixing and the mean grain size is shown in Figure 9, and the relation between the additive amount of the Ca constituent at the time of mixing and the coercive force (HcJ) is shown in Figure 10.

As shown in Figure 9, it can be seen that the addition of a certain predetermined amount of the Ca constituent made the grains fine. The tendency in the effect of making the grains fine is consistent with the tendency in the effect of improving the coercive force (HcJ) shown in Figure 10, and consequently it is conceivable that the coercive force (HcJ) improvement effect is originated from making the grains fine.

### <Example 6>

Three types of sintered bodies were prepared under the same conditions as in Example 5 except that after weighing out was carried out so as to give the mixing compositions shown in Figure 6, and thereafter a CaCO₃ powder (primary particle size: 1 µm) was added in an amount of 0 to 1.0 wt% in relation to the raw material powders constituting the main constituent. In each of the obtained sintered bodies, the ratio between Sr and Ba was such that Sr : Ba = 0.63:0.37. Although in Examples 4 and 5 described above, the amount of the Sr constituent was decreased according to the additive amount of the Ca constituent at the time of mixing, such an operation was not carried out in Example 6.

The composition, the coercive force (HcJ), the residual magnetic flux density (Br) and the squareness (Hk/HcJ) were measured for each of the obtained sintered bodies in the same manner as in Example 4. The results thus obtained are shown in Figure 6.

As shown in Figure 6, even when the operation of reducing the amount of the Sr constituent according to the additive amount of the Ca constituent at the time of mixing was not carried out, tendencies similar to those in Examples 4 and 5 have been verified.

### <Example 7>

Sintered bodies were prepared under the same conditions as in Example 4 except that after weighing out was carried out so as to give the mixing compositions shown in Figure 6, a SiO₂ powder (primary particle size: 0.01 µm) in an amount of 0 or 0.6 wt% and a CaCO₃ powder (primary particle size: 1 µm) in an amount of 0, 0.33 or 0.68 wt% were added in relation to the raw material powders constituting the main constituent; and additionally, at the time of the second milling, there were added a SrCO₃ powder (primary particle size: 2 µm) in an amount of 0.7 wt%, a BaCO₃ powder (primary particle size: 0.05µm) in an amount of 1.4 wt%, a CaCO₃ powder (primary particle size: 1 µm) in an amount of 0.35 wt%, a SiO₂ powder (primary particle size: 0.01 µm) in an amount of 0 or 0.6 wt%, a carbon powder (primary particle size: 0.05 µm) in an amount of 0.4 wt% and sorbitol (primary particle size: 10 µm) in an amount of 1.2 wt%.

The composition, the coercive force (HcJ) , the residual magnetic flux density (Br) and the squareness (Hk/HcJ) were measured for each of the obtained sintered bodies in the same manner as in Example 4. The results thus obtained are shown in Figure 6.

As shown in Figure 6, it can be seen that even when the Si constituent was added at the time of mixing concomitantly with the Ca constituent, high magnetic properties were exhibited.

### Industrial Applicability

The present invention can provide a ferrite magnetic material capable of making the coercive force (HcJ) and the residual magnetic flux density (Br) simultaneously attain high levels, in particular, such a material having a W-type ferrite as the main phase thereof, by adopting an optimal composition also in consideration of additives, and further by elaborating the method for producing the material.

## Claims

1. A ferrite magnetic material **characterized by** comprising as a main constituent a compound represented by a composition formula, AFe²⁺ₐFe³⁺_{b}O₂₇ (wherein 1.1 ≤ a ≤ 2.4, 12.3 ≤ b ≤ 16.1; and A comprises at least one element selected from Sr, Ba and Pb) , and as additives a Ca constituent in terms of CaCO₃ and a Si constituent in terms of SiO₂ so as to satisfy the relation CaCO₃/SiO₂ = 0.5 to 1.38 (molar ratio).

2. The ferrite magnetic material according to claim 1, **characterized in that** said a satisfies the relation, 1.5≤ a ≤ 2.4.

3. The ferrite magnetic material according to claim 1, **characterized in that** said b satisfies the relation, 12.9 ≤ b ≤ 15.6.

4. The ferrite magnetic material according to claim 1, **characterized in that** CaCO₃/SiO₂ = 0.6 to 1.1 (molar ratio).

5. The ferrite magnetic material according to claim 1, **characterized in that** said ferrite magnetic material constitutes any of a ferrite sintered magnet, a ferrite magnet powder, a bonded magnet in which said ferrite magnetic material is dispersed as a ferrite magnet powder in a resin, and a magnetic recording medium in which said ferrite magnetic material is contained as a film-like magnetic phase.

6. The ferrite magnetic material according to claim 5, **characterized in that** said ferrite sintered magnet is 0.8 µm or less in mean grain size.

7. The ferrite magnetic material according to claim 1, **characterized in that** said ferrite magnetic material comprises a hexagonal W-type ferrite as a main phase.

8. A method for producing a hexagonal W-type ferrite magnetic material **characterized by** comprising the steps of:
(a) obtaining a raw material powder comprising A (wherein A comprises at least one element selected from Sr, Ba and Pb) and Fe;
(b) obtaining a calcined body by maintaining said raw material powder at a predetermined temperature for a predetermined time; and
(c) milling said calcined body,
wherein CaCO₃ and/or SiO₂ are added before and/or after said step (b) so that the hexagonal W-type ferrite magnetic material comprises a Ca constituent in terms of CaCO₃ and a Si constituent in terms of SiO₂ so as to satisfy the relation of molar ratio CaCO₃/SiO₂ = 0.5 to 1.38.

9. The method for producing a hexagonal W-type ferrite magnetic material according to claim 8, **characterized by** further comprising a step (d) for sintering the milled powder obtained in said step (c).

10. The method for producing a hexagonal W-type ferrite magnetic material according to claim 8, **characterized by** preparing a ferrite magnet powder by pulverizing the sintered body obtained in said step (d).

11. The method for producing a hexagonal W-type ferrite magnetic material according to claim 8, **characterized by** preparing a ferrite magnet powder by said step (c).

12. The method for producing a hexagonal W-type ferrite magnetic material according to claim 8, **characterized by** adding a fraction of said A after calcining.

13. The method for producing a hexagonal W-type ferrite magnetic material according to claim 8, **characterized in that** said Ca constituent is added in said step (a) in an amount of 0.01 wt% or more and less than 1.0 wt% in terms of CaCO₃ in relation to said raw material powder.

14. The method for producing a hexagonal W-type ferrite magnetic material according to claim 9, **characterized in that**:
said Ca constituent is added in said step (a) in an amount of 0.01 wt% or more and less than 1.0 wt% in terms of CaCO₃ in relation to said raw material powder; and
said Ca constituent is further added in an amount of 0.1 to 2.0 wt% in terms of CaCO₃ after said step (b) and before said sintering step (c).
